# EUROPÄISCHE PATENTSCHRIFT

(11) **EP 2 643 657 B1**
(45) Veröffentlichungstag und Bekanntmachung des Hinweises auf die Patenterteilung: **19.03.2014**
(21) Anmeldenummer: 11794026.2
(22) Anmeldetag: 22.11.2011
(51) Int. Cl.: G01B 5/00, G01B 5/008, B23Q 11/00, F16F 7/10

(54) **DYNAMISCHER MASSENAUSGLEICH FÜR EIN KOORDINATENMESSGERÄT**
COUNTERBALANCE FOR A COORDINATE MEASURING MACHINE
CONTREBALANCEMENT POUR UNE MACHINE À MESURER DES COORDONNÉES

(30) Priorität: 26.11.2010 DE 102010052504
(43) Veröffentlichungstag der Anmeldung: 02.10.2013
(73) Patentinhaber: Wenzel ScanTec GmbH, 91171 Greding (DE)
(72) Erfinder: MÜHLBERGER, Klaus, 91171 Greding (DE); LUDWIG, Joseph, 37154 Northeim (DE); LENTZ, Ralph, 60435 Frankfurt (DE)
(74) Vertreter: Fugmann, Winfried
(86) Internationale Anmeldenummer: PCT/EP2011/005881
(87) Internationale Veröffentlichungsnummer: WO 2012/069181

(56) Entgegenhaltungen:
- WO-A2-2006/075209
- DE-A1- 3 121 373
- JP-A- 2002 001 629

## Beschreibung

Die vorliegende Erfindung betrifft ein Koordinatenmessgerät sowie ein Verfahren zum Betreiben eines Koordinatenmessgeräts.

Koordinatenmessgeräte werden zur Aufnahme der Raumkoordinaten von Messpunkten auf der Oberfläche von Messobjekten eingesetzt. Hierfür weist ein Koordinatenmessgerät (KMG) eine Grundstruktur zur Aufnahme des Messobjekts bzw. Werkstücks auf sowie eine Mehrzahl von antreibbaren Achsen, wodurch ein Tastkopf des Koordinatenmessgeräts innerhalb eines Messvolumens in beliebige Positionen relativ zum Messobjekt gebracht werden kann. Insbesondere kann ein Koordinatenmessgerät drei aufeinander aufbauende, zueinander senkrechte Achsen zur translatorischen Verschiebung des Tastkopfs in den drei Raumrichtungen umfassen. Der Tastkopf kann einen Taster zur berührenden Antastung der Werkstückoberfläche aufnehmen oder beispielsweise einen optischen Sensor zur berührungslosen Antastung der Werkstückoberfläche. Die Achsen des Koordinatenmessgeräts weisen Maßstäbe und Positionsgeber auf, aus deren Signalen eine Steuerungseinrichtung die Position des Tastkopfs sowie zusammen mit den Signalen des Tasters bzw. Sensors die Koordinaten eines angetasteten Messpunkts auf der Objektoberfläche ermittelt. Das Koordinatenmessgerät kann auch eine oder mehrere Drehachsen aufweisen, um das Werkstück relativ zum Taster bzw. Sensor durch eine rotatorische Bewegung auszurichten.

Für eine genaue Ermittlung der Koordinaten eines angetasteten Messpunkts ist es erforderlich, dass sich aus den Signalen der Positionsgeber der Achsen des Koordinatenmessgeräts die Position und ggf. die Orientierung des Tastkopfs möglichst genau ermitteln lässt. Fehler in der Positionierung bzw. Orientierung des Tastkopfs können dabei sowohl durch statische, geometriebedingte Abweichungen als auch durch dynamische Verformungen, insbesondere durch Schwingungen, verursacht werden, die beispielsweise bei einer Beschleunigung oder Abbremsung des Tastkopfs bzw. der mechanischen Strukturen des Koordinatenmessgeräts entstehen können. Derartige Schwingungen werden insbesondere dann in die Struktur bzw. die Achsen des Koordinatenmessgeräts eingekoppelt, wenn eine Achse bewegt wird, die nicht direkt an der Grundstruktur des Koordinatenmessgeräts angreift, beispielsweise eine horizontale Achse, die an einer vertikalen Säule ansetzt. Es wäre daher wünschenswert, solche Schwingungen, die insbesondere bei Bewegung einer horizontalen Achse entstehen können, zu vermeiden.

Aus DE 10 2005 040 223 A1 ist es bekannt, Schwingbewegungen des Tastkopfs durch einen aktiven Schwingungstilger zu unterdrücken, der am vorderen freien Ende eines Balkens, der den Tastkopf trägt, angeordnet ist. Der Schwingungstilger beinhaltet eine eigenständig bewegbare Masse und eine Regelschaltung, die die Masse gegenläufig zu der Schwingbewegung bewegt. Hiermit sind jedoch nicht nur ein erhöhter konstruktiver und regelungstechnischer Aufwand, sondern auch eine unerwünschte Zunahme der mit dem Tastkopf über die aufeinander aufbauenden Achsen des Koordinatenmessgeräts zu bewegenden Masse verbunden. Zudem können hiermit nicht alle auftretenden dynamischen Verformungen beseitigt werden.

In der nicht vorveröffentlichten Patentschrift DE 10 2009 039 201 B3 werden Einrichtungen zur Kompensation von Beschleunigungskräften mittels Impulsentkopplung bei Mess- und Werkzeugmaschinen diskutiert.

Gemäß DE 100 27 775 A1 wird bei einer Werkzeugmaschine eine Ausgleichsmasse von einer aktiven Antriebskomponente mit einer vorbestimmten Beschleunigung verfahren. Das Beschleunigungsprofil der Ausgleichsmasse wird rechnerisch aus den Fahrprofilen der Werkzeugkörper der Werkzeugmaschine ermittelt. In EP 1 724 054 A1 ist eine Einrichtung zur Bewegung eines Gegengewichts bei einer Werkzeugmaschine offenbart, wobei ein erster Antrieb zum Antrieb eines beweglichen Maschinenteils vorgesehen ist und ein zweiter Antrieb, um das Gegengewicht mechanisch unabhängig von dem beweglichen Maschinenteil in einer dessen Bewegungsrichtung entgegengesetzten Richtung zu bewegen. Aus DE 198 10 996 A1 ist ein impulsentkoppelter Direktantrieb zum Antrieb einer Nutzlast in einer Unrunddrehmaschine bekannt.

Aus DE 31 21 373 A1 ist ein dreidimensionales Messgerät mit einem auf einer Richtplatte verschiebbaren Fuß bekannt, wobei der Fuß an der Richtplatte verfahrbar gelagert ist und eine senkrecht stehende Säule trägt, an der ein Querarm verschiebbar gelagert ist. Der Querarm trägt einen Aufnahmekopf für Antastwerkzeuge. Am oder im Fuß sind zwei Gegengewichte angeordnet, die gegensinnig zum Querarm verschoben werden. Hierdurch wird einer durch die Auskraglänge des Querarms bestimmten Schwenkung des Fußes entgegengewirkt, um durch Verformung im Bereich des Fußes verursachte Fehler zu vermeiden.

Es ist die Aufgabe der vorliegenden Erfindung, ein Koordinatenmessgerät sowie ein Verfahren zum Betreiben eines Koordinatenmessgeräts anzugeben, wobei die Entstehung von Verformungen und/oder Schwingungen bei einer beschleunigten oder verzögerten Bewegung des Tastkopfs bzw. einer oder mehrerer Achsen des Koordinatenmessgeräts weitgehend vermieden werden kann.

Diese Aufgabe wird durch ein Koordinatenmessgerät sowie durch ein Verfahren wie in den unabhängigen Ansprüchen angegeben gelöst.

Ein erfindungsgemäßes Koordinatenmessgerät umfasst mindestens eine im Wesentlichen horizontal ausgerichtete Achse zur Bewegung eines Tastkopfs in einer Richtung der Achse. Hierfür kann die Achse einen Grundkörper bzw. eine Tragstruktur umfassen, die mindestens eine lineare Führung zur Führung eines in der Achsrichtung beweglichen Schlittens aufweisen kann, der den Tastkopf oder eine weitere Struktur tragen kann, beispielsweise eine weitere Achse, die ihrerseits den Tastkopf trägt. Der Schlitten kann auch selbst eine entsprechende Führung aufweisen. Ferner umfasst die Achse eine Antriebsanordnung, durch die der Schlitten in einer positiven oder negativen Richtung der Achse motorisch bewegbar ist. Bei einem Koordinatenmessgerät sind die linearen Achsen in der Regel parallel zu den Achsenrichtungen eines kartesischen Koordinatensystems angeordnet, auf welches die aufgenommenen Koordinaten der Messpunkte auf der Werkstückoberfläche bezogen sind. In diesem Fall sind eine positive Achsrichtung, in der der jeweilige Koordinatenwert zunimmt, und eine dieser entgegengesetzt gerichtete negative Achsrichtung, in der der Koordinatenwert abnimmt, definiert. Der Begriff "Achse" bezeichnet hier eine Gesamtheit von Bauelementen, die bei einem Koordinatenmessgerät der Realisierung einer Bewegung des Tastkopfs in einer Richtung, insbesondere einer Verschiebung in einer Koordinatenrichtung, dienen.

Erfindungsgemäß ist die Antriebsanordnung zum Bewegen einer Gegenmasse derart ausgebildet, dass die Gegenmasse gleichzeitig mit dem Schlitten bewegt wird, und zwar in einer der Bewegungsrichtung des Schlittens entgegengesetzten Richtung. Wird somit der Schlitten in einer positiven Richtung der Achse bewegt, so wird die Gegenmasse in einer negativen Richtung der Achse bewegt und umgekehrt. Die Gegenmasse und die Führung der Gegenmasse sowie ggf. weitere Bauteile zur Realisierung der Bewegung der Gegenmasse sind somit der Achse zugeordnet und können insbesondere von der Achse im oben genannten Sinn umfasst sein.

Dadurch, dass die Gegenmasse in einer der Bewegungsrichtung des Schlittens entgegengesetzten Richtung bewegbar ist, wird zumindest ein Teil der durch die Beschleunigung öder Verzögerung des Schlittens in die Achse und dadurch in das Koordinatenmessgerät eingekoppelten dynamischen Kräfte kompensiert. Die zur Beschleunigung oder Verzögerung des Schlittens aufzuwendenden Kräfte bzw. die vom Schlitten auf die Antriebsanordnung ausgeübten Trägheitskräfte werden somit zumindest teilweise durch die auf die Gegenmasse ausgeübten Kräfte bzw. die von der Gegenmasse ausgeübten Trägheitskräfte ausgeglichen. Die Gegenmasse, die aus einem oder mehreren Massekörpem bestehen kann, wirkt daher als Ausgleichsmasse zum Ausgleich dynamischer Kräfte, die Verformungen und/oder Schwingungen des Aufbaus bzw. der Achsen des Koordinatenmessgeräts verursachen können. Erfindungsgemäß können hierdurch die Entstehung von dynamisch verursachten Verformungen und/oder Schwingungen des Koordinatenmessgeräts weitgehend vermieden werden.

Die erfindungsgemäße Ausbildung einer Achse eines Koordinatenmessgeräts kann auch bei einer vertikalen Achse zweckmäßig sein, ist aber insbesondere bei einer horizontalen Achse vorteilhaft, weil im Unterschied zu einer vertikalen Achse die entlang einer horizontalen Achse ausgeübte Beschleunigungs- oder Verzögerungskraft in der Regel nicht direkt von einer Grundstruktur bzw. der Aufstellung des Koordinatenmessgeräts aufgefangen wird, sondern zur Ausübung von Kipp- und/oder Biegemomenten auf die tragenden Strukturen bzw. die Achsen des Koordinatenmessgeräts führt. Die Bewegung des Tastkopfs entlang einer horizontalen Achse ist daher bezüglich der Einkopplung von Schwingungen in der Regel besonders kritisch. Insbesondere durch die erfindungsgemäße Ausbildung einer horizontalen Achse eines Koordinatenmessgeräts kann deshalb die Genauigkeit der Positionierung des Tastkopfs erheblich verbessert werden. Hierdurch kann die Messgenauigkeit oder, bei Beibehaltung der Genauigkeit, die Geschwindigkeit der Positionierung und/oder Messung gesteigert werden.

Gemäß einer bevorzugten Ausführungsform der Erfindung ist die Antriebsanordnung dem Schlitten zugeordnet und wirkt auf die Gegenmasse oder umgekehrt. Dies bedeutet, dass die Antriebsanordnung zumindest teilweise kinematisch mit dem Schlitten bzw. mit der Gegenmasse verbunden ist und bei einer Bewegung des Schlittens bzw. der Gegenmasse in Achsrichtung mit diesem bzw. dieser mitbewegt wird. Insbesondere wirkt eine dem Schlitten zugeordnete Antriebsanordnung direkt auf die Gegenmasse, d.h., die von einem mit dem Schlitten verbundenen aktiven Bauelement der Antriebsvorrichtung erzeugte Antriebskraft greift an der Gegenmasse an. Umgekehrt kann eine der Gegenmasse zugeordnete Antriebsanordnung direkt auf den Schlitten einwirken. Auf diese Weise wird unmittelbar eine Relativbewegung zwischen Schlitten und Gegenmasse erzeugt, ohne dass ein Angreifen der Antriebsanordnung an einem Grundkörper der Achse notwendig ist. Beim Beschleunigen bzw. Verzögern werden deshalb gleich große, aber einander entgegengerichtete Kräfte auf den Schlitten und auf die Gegenmasse ausgeübt, so dass in der Summe praktisch keine Trägheitskraft auf die Achse einwirkt. Hierdurch kann eine Bewegung mit hoher Dynamik erzeugt werden, ohne dass in erheblichem Maße Schwingungen in das Koordinatenmessgerät eingekoppelt werden.

In besonders bevorzugter Weise bleibt bei einer Bewegung des Schlittens in Achsrichtung ein Massenschwerpunkt der Achse im Wesentlichen unverändert; in diesem Fall heben sich die Beschleunigungs- bzw. Verzögerungskräfte, die auf den Schlitten und die Gegenmasse ausgeübt werden, gegenseitig genau auf. Dies kann dadurch erreicht werden, dass bei der Bewegung von Schlitten und Gegenmasse keine anderen Kräfte auf Schlitten und Gegenmasse einwirken als die von der mit dem jeweils anderen Bauteil verbundenen Antriebsanordnung erzeugten. Im Allgemeinen wird dies jedoch nicht der Fall sein, beispielsweise aufgrund des Aufbaus und der Zuordnung der Antriebsanordnung, aufgrund von Reibungskräften, die bei der Bewegung von Schlitten und Gegenmasse wirken, und/oder ggf. aufgrund äußerer Kräfte.

Gemäß einer besonders bevorzugten Ausführungsform der Erfindung ist daher die Antriebsanordnung derart ausgebildet, dass bei einer Bewegung des Schlittens ein Massenschwerpunkt der Achse relativ zum Grundkörper im Wesentlichen unverändert bleibt. Dies bedeutet, dass die Massenverlagerung aufgrund der Bewegung des Schlittens relativ zum Grundkörper durch eine entgegengesetzte Massenverlagerung der mit dem Schlitten verbundenen Gegenmasse ausgeglichen wird. Der Impuls der Gegenmasse als Produkt von Masse und Geschwindigkeit ist somit betragsmäßig gleich groß, aber in der Richtung entgegensetzt dem Impuls des Schlittens, so dass der gesamte Impuls, bezogen auf den Grundkörper der Achse, Null bleibt. Dies kann durch eine geeignet gestaltete Kopplung der Bewegungen des Schlittens und der Gegenmasse mit dem Grundkörper der Achse erreicht werden. Hierdurch kann vermieden werden, dass beispielsweise aufgrund von unterschiedlichen Reibungskräften, die auf den Schlitten und die Gegenmasse bei der Bewegung relativ zum Grundkörper der Achse wirken, sich die Impulse von Schlitten oder Gegenmasse ändern und die einander entgegengesetzten Bewegungen sich nicht gegenseitig ausgleichen. Da der Massenschwerpunkt der Achse in Ruhe bleibt, wird eine Einkopplung von Schwingungen weitestgehend vermieden.

Weiterhin ist es vorteilhaft, wenn die Masse des Schlittens und die Masse der Gegenmasse zumindest näherungsweise gleich groß sind. Die Antriebsanordnung ist in diesem Fall derart ausgebildet, dass bei einer Bewegung des Schlittens um einen Bewegungsbetrag, d.h., über eine Strecke in Achsrichtung, die Gegenmasse gleichzeitig um einen gleichen Bewegungsbetrag, d.h., über eine gleichlange Strecke, in der der Bewegungsrichtung des Schlittens entgegengesetzten Richtung relativ zum Grundkörper der Achse bewegt wird. Dies kann beispielsweise dadurch erreicht werden, dass bei der Bewegung von Schlitten und Gegenmasse nur die Kräfte auf Schlitten und Gegenmasse einwirken, die von einer mit dem jeweils anderen Bauteil verbundenen Antriebsanordnung direkt auf Schlitten bzw. Gegenmasse ausgeübt werden. Dies kann aber auch durch eine entsprechende Verbindung zwischen Schlitten und Gegenmasse erreicht bzw. erzwungen werden. Dadurch, dass die beiden Massen gleich groß sind und die Gegenmasse durch die Antriebsanordnung gegengleich zum Schlitten bewegt wird, kann auf besonders einfache und wirkungsvolle Weise eine weitestgehende Kompensation der auftretenden dynamischen Kräfte erzielt werden.

Insbesondere können der Schlitten und die Gegenmasse durch mindestens ein langerstrecktes, flexibles, über mindestens ein Umlenkmittel, beispielsweise eine an einem Grundkörper der Achse angeordnete Rolle, geführtes Zugmittel miteinander und mit dem Grundkörper verbunden sein. Hierdurch kann beispielsweise erreicht werden, dass auch bei Einwirkung ungleicher Reibungskräfte auf Schlitten und Gegenmasse bei einer Bewegung des Schlittens eine solche Bewegung der Gegenmasse stattfindet, dass der Massenschwerpunkt der Achse relativ zum Grundkörper in Ruhe bleibt. Insbesondere kann dadurch auch verhindert werden, dass durch Einwirkung einer äußeren Kraft im unbestromten Zustand des Antriebs der Schlitten alleine oder der Schlitten und die Gegenmasse gemeinsam in die gleiche Richtung verschoben werden.

Das mindestens eine Zugmittel kann zweckmäßigerweise als vorgespanntes Zugseil oder Stahlband ausgebildet sein. Die Vorspannung kann dabei beispielsweise durch eine Feder oder eine elastische Befestigung des Stahlbands bewirkt werden. Dies bewirkt eine einfache, spielfreie und hinsichtlich der erforderlichen Dynamik hinreichend steife Kopplung der Bewegungen des Schlittens und der Gegenmasse, um auch kurzzeitige Verlagerungen des Massenschwerpunkts der Achse zu vermeiden.

Gemäß einer bevorzugten Ausführungsform der Erfindung ist das langerstreckte Zugmittel mit einem ersten Ende am Schlitten und mit einem zweiten Ende an der Gegenmasse befestigt. Vom Schlitten ist das Zugmittel in einer positiven bzw. negativen Richtung der Achse zum Umlenkmittel geführt, wird durch das Umlenkmittel in eine negative bzw. positive Richtung der Achse umgelenkt und ist in dieser Richtung zur Gegenmasse geführt. Hierdurch können in besonders einfacher Weise gegengleiche Bewegungen von Schlitten und Gegenmasse entlang der Achsrichtung erzwungen werden.

Gemäß einer besonders bevorzugten Ausführungsform sind ein erstes und ein zweites Zugmittel vorgesehen, die in einander entgegengesetzten Richtungen am Schlitten ansetzen. Das erste und das zweite Zugmittel setzen auch in einander entgegengesetzten Richtungen an der Gegenmasse an. Das erste Zugmittel wird durch ein erstes Umlenkmittel und das zweite Zugmittel durch ein zweites Umlenkmittel in eine jeweils entgegengesetzte Richtung umgelenkt. Dies bedeutet, dass das erste Zugmittel, ausgehend vom Schlitten, an dem es mit einem ersten Ende befestigt ist, beispielsweise in einer positiven Achsrichtung bis zum ersten Umlenkmittel geführt ist, dort in eine negative Achsrichtung umgelenkt wird, in der negativen Achsrichtung bis zur Gegenmasse geführt ist und dort mit seinem zweiten Ende befestigt ist. Entsprechend ist das zweite Zugmittel an der Gegenmasse mit einem ersten Ende befestigt, in einer negativen Achsrichtung zum zweiten Umlenkmittel geführt, wird dort in eine positive Achsrichtung umgelenkt und ist in dieser Richtung zum Schlitten geführt und daran mit seinem zweiten Ende befestigt. Hierdurch können sich das erste und das zweite Zugmittel gegenseitig unter Vorspannung halten und besonders sicher und steif miteinander gekoppelte spielfreie gegengleiche Bewegungen des Schlittens und der Gegenmasse bewirken.

Insbesondere können der Schlitten und die Gegenmasse in Achsrichtung jeweils eine solche Längserstreckung aufweisen, dass beispielsweise das erste Zugmittel jeweils an einem in negativer Achsrichtung gelegenen Endbereich des Schlittens und der Gegenmasse ansetzt und das zweite Zugmittel jeweils an einem in positiver Achsrichtung gelegenen Endbereich des Schlittens und der Gegenmasse. Hierdurch entsteht insbesondere dann, wenn Schlitten und Gegenmasse jeweils eine Längserstreckung haben, die näherungsweise dem maximalen Verfahrweg entspricht, eine besonders raumsparende Anordnung.

Dabei ist es besonders bevorzugt, dass das erste und das zweite Umlenkmittel als Rollen ausgebildet sind, die auf einer gemeinsamen, insbesondere quer zur Achsrichtung stehenden, Drehachse am Grundkörper der Achse angeordnet sind. Hierdurch kann eine besonders einfache, kostengünstige und kompakte Bauweise erzielt werden.

Gemäß einer bevorzugten Ausführungsform der Erfindung umfasst die Antriebsanordnung einen Linearmotor zum Antrieb des Schlittens und der Gegenmasse. Dadurch, dass der Antrieb der Achse als Linearmotor ausgebildet ist, wird die Einkopplung von Drehmomenten durch rotatorisch bewegte Teile vermieden, die beispielsweise bei einem rotatorischen Motor und einer Kraftübertragung über einen Riemen, eine Spindel und/oder ein Zahnradgetriebe auftreten können. Darüber hinaus erzeugt ein Linearmotor ausschließlich in Verfahrrichtung wirkende Kräfte. Ferner arbeitet ein Linearmotor spielfrei und ermöglicht eine besonders hohe Dynamik bei der Bewegung der Achse. Der Linearmotor wirkt insbesondere zwischen Schlitten und Gegenmasse und erzeugt dadurch eine Relativbewegung der Gegenmasse relativ zum Schlitten, ohne dass eine Einwirkung des Linearmotors auf den Grundkörper der Achse notwendig ist.

Ein solcher Linearmotor umfasst insbesondere einen Stator und einen Läufer, der auch als Forcer bezeichnet wird. Gemäß einer besonders bevorzugten Ausführungsform ist der Forcer kinematisch dem Schlitten und der Stator der Gegenmasse zugeordnet. Insbesondere kann der Forcer ein Teil des Schlittens sein bzw. an einem Grundkörper des Schlittens befestigt sein. Der Stator kann insbesondere selbst als massebestimmendes Element der Gegenmasse ausgebildet sein. Auf diese Weise kann die für den Betrieb des Linearmotors notwendige Masse des Stators in vorteilhafter Weise als Gegenmasse genutzt werden.

Bei einer Bewegung des Forcers relativ zum Stator erfolgt somit eine Bewegung des Schlittens in einer Bewegungsrichtung und eine Bewegung der Gegenmasse in einer der Bewegungsrichtung entgegengesetzten Richtung. Der Betrag und die Geschwindigkeit der Bewegung des Forcers relativ zum Stator sind daher größer als die Bewegung des Schlittens innerhalb der Achse, d.h. relativ zu einem Grundkörper der Achse.

Erfindungsgemäß weist die Achse mindestens eine Führung auf, auf der der Schlitten und die Gegenmasse geführt sind. Dadurch, dass sowohl der Schlitten als auch die Gegenmasse auf derselben Führung geführt sind, sind die Bewegungen des Schlittens und der Gegenmasse automatisch parallel bzw. einander entgegengerichtet. Hierdurch entfällt sowohl die Notwendigkeit zusätzlicher Führungen als auch die Notwendigkeit einer Justierung der Führungen von Schlitten und Gegenmasse zueinander. Ferner wird es durch die Benutzung derselben Führung ermöglicht, die Bewegungswege von Schlitten und Gegenmasse nah benachbart zueinander anzuordnen. Auf diese Weise sind auch die Wirklinien der auf Schlitten und Gegenmasse ausgeübten Beschleunigungs- und Verzögerungskräfte bzw. der von diesen ausgeübten Trägheitskräfte nahe zueinander benachbart, so dass das eingekoppelte Drehmoment gering ist.

In besonders bevorzugter Weise weist die Achse eine erste und eine zweite Führung auf, wobei der Schlitten mit einem ersten Lager auf der ersten Führung und mit einem zweiten und einem dritten Lager auf der zweiten Führung geführt ist und die Gegenmasse mit einem ersten und einem zweiten Lager auf der ersten Führung und mit einem dritten Lager auf der zweiten Führung geführt ist. Dabei kann beispielsweise das erste Lager des Schlittens zwischen dem ersten und dem zweiten Lager der Gegenmasse auf der ersten Führung angeordnet sein. Hierdurch wird eine besonders platzsparende und steife Anordnung erreicht. Zur weiteren Erhöhung der Steifigkeit der Führung von Schlitten und Gegenmasse können weitere Lager vorhanden sein.

Gemäß einer bevorzugten Ausführungsform weist ein erfindungsgemäßes Koordinatenmessgerät eine Mehrzahl von kinematisch aufeinander aufbauenden, zueinander senkrecht stehenden, linearen Achsen auf, wobei die mindestens eine horizontale Achse auf mindestens einer weiteren Achse aufbaut. So kann das Koordinatenmessgerät beispielsweise eine vertikale und zwei horizontale Achsen aufweisen, die jeweils senkrecht zueinander ausgerichtet sind, wobei mindestens eine der horizontalen Achsen wie vorstehend beschrieben derart ausgebildet ist, dass ein Schlitten und eine Gegenmasse vorgesehen sind und bei einer Bewegung des Schlittens die Gegenmasse in die entgegengesetzte Richtung bewegbar ist.

Bei einem ZYX-Aufbau des Koordinatenmessgeräts ist die Z-Achse als vertikale, fest mit der Grundstruktur verbundene Säule ausgebildet. Ein in Z-Richtung beweglicher Schlitten der Z-Achse trägt die horizontale Y-Achse, entlang derer ein Schlitten in Y-Richtung beweglich ist. Der in Y-Richtung bewegliche Schlitten wiederum trägt die X-Achse, die einen als horizontaler Arm ausgebildeten Schlitten umfasst, der den Tastkopf trägt. Bei einem derartigen Aufbau können in besonders vorteilhafter Weise die X-Achse oder die X- und die Y-Achse über die vorstehend beschriebenen Merkmale verfügen.

Bei einem YZX-Aufbau ist ein in horizontaler Richtung beweglicher Schlitten als Z-Säule ausgebildet, die einen in vertikaler Richtung beweglichen Schlitten trägt. Dieser trägt die X-Achse, die einen in X-Richtung verschiebbaren horizontalen Arm aufweisen kann, der den Tastkopf trägt. Auch bei einem solchen Aufbau kann die X-Achse in besonders vorteilhafter Weise wie oben beschrieben ausgebildet sein.

Die vorliegende Erfindung ist jedoch nicht auf die genannten Bauweisen von Koordinatenmessgeräten beschränkt. Ein erfindungsgemäßes Koordinatenmessgerät kann weitere vertikale oder horizontale lineare Achsen sowie Drehachsen aufweisen.

Bei einem erfindungsgemäßen Verfahren zum Betreiben eines Koordinatenmessgeräts, das mindestens eine horizontale Achse umfasst, die eine Antriebsanordnung und einen durch die Antriebsanordnung in einer Richtung der Achse motorisch bewegbaren Schlitten umfasst, der direkt oder indirekt den Tastkopf trägt, wird bei einer Bewegung des Schlittens in einer Bewegungsrichtung entlang der Achse eine Gegenmasse in einer der Bewegungsrichtung entgegengesetzten Richtung bewegt. Hierdurch kann die Entstehung von Verformungen und/oder Schwingungen bei einer beschleunigten oder verzögerten Bewegung des Tastkopfs bzw. der horizontalen Achse des Koordinatenmessgeräts weitgehend vermieden werden. Insbesondere kann ein wie oben beschrieben ausgebildetes Koordinatenmessgerät gemäß einem erfindungsgemäßen Verfahren betrieben werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Aspekte der Erfindung ergeben sich aus der nachfolgenden Beschreibung eines bevorzugten Ausführungsbeispiels und der beigefügten Zeichnung. Es zeigen, jeweils in schematischer Darstellung:
Fig. 1 eine perspektivische Ansicht einer Achse eines Koordinatenmessgeräts gemäß einem Ausführungsbeispiel der Erfindung im eingefahrenen Zustand;
Fig. 2 eine perspektivische Ansicht der Achse gemäß Fig. 1 im ausgefahrenen Zustand;
Fig. 3 eine weitere perspektivische Ansicht der Achse gemäß Fig. 1 im eingefahrenen Zustand;
Fig. 4 eine weitere perspektivische Ansicht der Achse gemäß Fig. 1 im ausgefahrenen Zustand;
Fig. 5 eine Querschnittsansicht der Achse gemäß Fig. 1;
Fig. 6 eine perspektivische Ansicht eines erfindungsgemäßen Koordinatenmessgeräts.

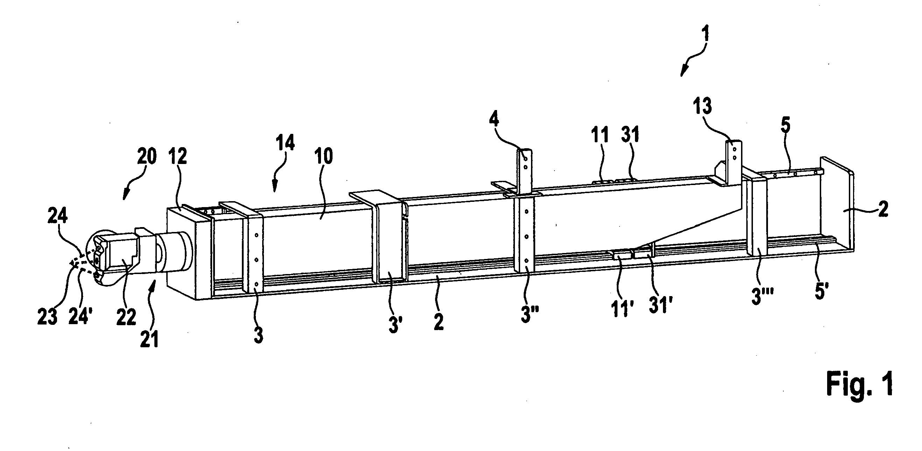

In Fig. 1 ist beispielhaft eine Achse 1 eines Koordinatenmessgeräts im eingefahrenen Zustand gezeigt. Die Achse 1 umfasst ein Gehäuse 2, das in Fig. 1 nur teilweise dargestellt ist und das eine mechanische Tragstruktur bzw. den Grundkörper der Achse 1 bildet. Am Gehäuse 2 sind Haltebügel 3, 3', 3", 3'" angeordnet, die die mechanische Struktur versteifen. Ein Haltebügel 3" trägt einen feststehenden Haltewinkel 4 zur Befestigung einer Kabelführung, beispielsweise einer Kabelkette (nicht dargestellt). Auf der Innenseite des Gehäuses 2 sind lineare Führungen 5, 5' zur Führung eines verschiebbaren Arms 10 in Richtung der Achse 1 angeordnet. Der Arm 10 ist mit einem Lager 11 auf der Führung 5 und mit einem weiteren Lager 11' auf der Führung 5' gelagert. Ein weiteres Lager 11" zur Lagerung auf der Führung 5' ist in Fig. 1 nicht dargestellt.

An seinem vorderen Ende trägt der Arm 10 eine Platte 12, an der ein Tastkopf 20 angeordnet ist. Der Tastkopf 20 kann beispielsweise ein Dreh-Schwenk-Gelenk 21 aufweisen, wodurch ein optischer Sensor 22 drehbar und schwenkbar an der Platte 12 gelagert ist. Wie in Fig. 1 symbolisch dargestellt, kann der optische Sensor beispielsweise nach dem Triangulationsprinzip arbeiten, wobei ein Lichtstrahl 23 auf eine Oberfläche eines nicht dargestellten Werkstücks gerichtet wird und in einer oder mehreren in einem Winkel zur Richtung des Lichtstrahls stehenden Beobachtungsrichtungen 24, 24' das von der Werkstückoberfläche reflektierte Licht detektiert wird.

Am hinteren Ende ist am Arm 10 ein Haltewinkel 13 zur Anbringung einer Kabelführung, beispielsweise einer nicht dargestellten Kabelkette, vorgesehen. Der Arm 10 mit der Platte 12, der Tastkopf 20 sowie weitere, nicht vollständig dargestellte, mit dem Arm 10 mitbewegliche Bauteile bilden einen in Achsrichtung beweglichen Schlitten 14. In Fig. 1 ist ferner ein Lager 31 auf der Führung 5 sowie ein Lager 31' auf der Führung 5' dargestellt, die zu einer in Fig. 1 nicht erkennbaren Gegenmasse gehören. Die Führungen 5, 5' können beispielsweise als Kugelschienenführungen ausgebildet sein, auf denen die als Kugellager ausgebildeten Lager 11, 11', 11", 31, 31', 31" verschiebbar sind.

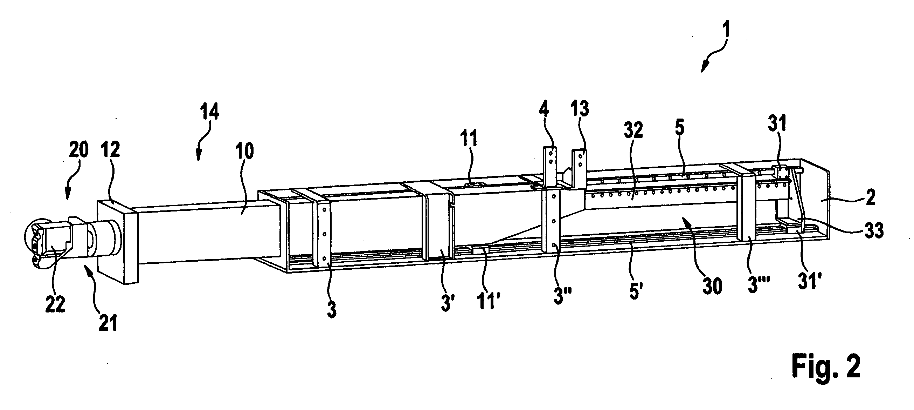

Wie in Fig. 2 dargestellt, kann der Arm 10 in Achsrichtung ausgefahren werden, beispielsweise um einen Betrag von ca. 500 mm. Hierdurch wird die Platte 12 mit dem daran angeordneten Tastkopf 20 gegenüber dem Gehäuse 2, das den Grundkörper der Achse bildet, entsprechend nach vorne verlagert. In Fig. 2 ist eine Gegenmasse 30 zu erkennen, die den Stator 32, einen Haltewinkel 33 und die daran befestigten Lager 31, 31' umfasst. Mit Hilfe der Lager 31, 31' sowie eines weiteren, nicht gezeigten Lagers auf der Führung 5 ist die Gegenmasse 30 ebenfalls in Achsrichtung beweglich gelagert. Die Massen des Schlittens 14 und der Gegenmasse 30 sind im dargestellten Ausführungsbeispiel näherungsweise gleich groß. Dies kann insbesondere durch konstruktive Maßnahmen am Stator 32 oder am Arm 10 erreicht werden, beispielsweise durch Leichtbauweise des Arms 10, etwa als Fachwerk aus Aluminium und/oder Faserverbundwerkstoffen, oder auch durch Zusatzmassen an der Gegenmasse 30.

Wie aus dem Vergleich von Fig. 1 mit Fig. 2 hervorgeht, wird bei einer Verlagerung des Arms 10 nach vorne die Gegenmasse 30 nach hinten verlagert. Da hier die Masse des in Achsrichtung beweglichen Schlittens 14 gleich der Masse der Gegenmasse 30 ist, ist der Verstellweg, um den die Gegenmasse 30 bei einer Verlagerung des Arms 10 bewegt wird, gleich dem Verstellweg des Arms 10, jedoch in entgegengesetzter Richtung gerichtet.

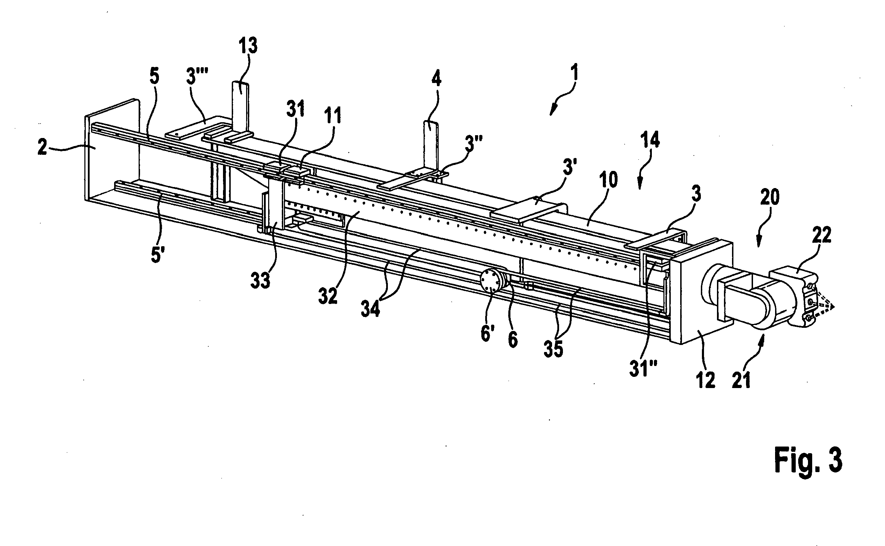

In Fig. 3 ist die Achse 1 in eingefahrener Stellung in einer weiteren Ansicht gezeigt, wobei das Gehäuse 2 wieder nur teilweise dargestellt ist. Der Stator 32 ist auf der Führung 5 mit den Lagern 31, 31" gelagert; das Lager 31' auf der Führung 5 wird in Fig. 2 durch den Haltebügel 33 verdeckt. Im eingefahrenen Zustand des Arms 10 befindet sich der Stator 32 im Bereich seiner vorderen Endstellung.

Wie in Fig. 3 zu erkennen ist, sind zur Verbindung des Schlittens 14 mit der Gegenmasse 30 ein erstes Stahlband 34 und ein zweites Stahlband 35 vorgesehen. Das erste Stahlband 34 ist mit einem ersten, oberen Ende am Arm 10 und mit einem zweiten, unteren Ende an dem mit dem Stator 32 verbundenen Haltebügel 33 befestigt. Das zweite Stahlband 35 ist mit einem ersten, oberen Ende mit dem Stator 32 verbunden und mit einem zweiten, unteren Ende mit der Platte 12, die mit dem Arm 10 verbunden ist. Die Stahlbänder 34, 35 sind gegeneinander vorgespannt und werden von zwei Rollen 6, 6', die auf einer gemeinsamen, mit dem Gehäuse 2 verbundenen Drehachse angeordnet sind, jeweils um 180° umgelenkt.

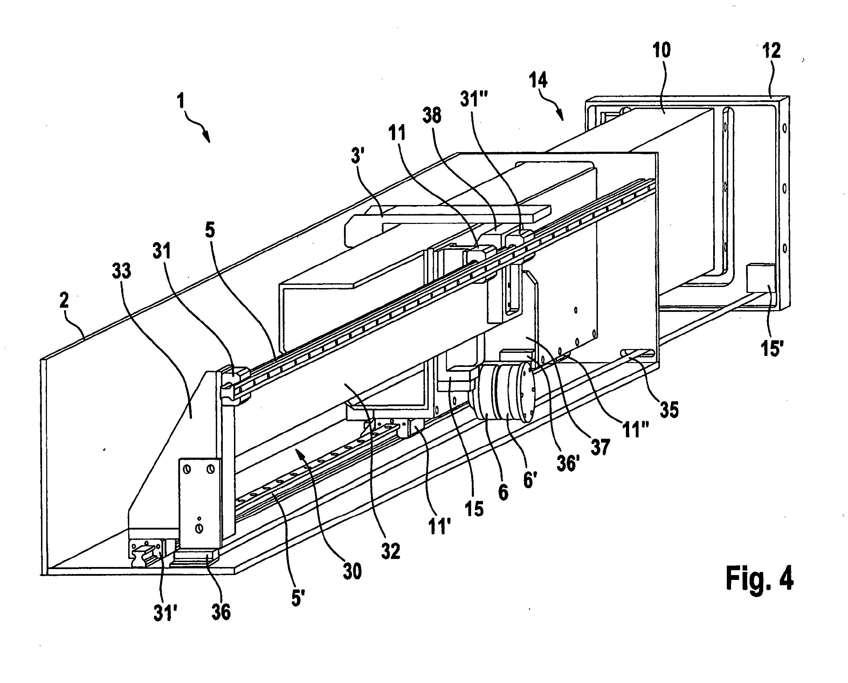

Dies ist in der Ansicht der Fig. 4, die die Achse 1 aus einer anderen Perspektive im ausgefahrenen Zustand zeigt, im Detail zu erkennen. Das erste Stahlband 34 ist mit dem ersten, oberen Ende in einem Befestigungselement 15 befestigt, beispielsweise geklemmt. Das Befestigungselement 15 ist mit dem Arm 10 und dadurch mit dem Schlitten 14 verbunden. Das zweite, untere Ende des ersten Stahlbands 34 ist durch ein Befestigungselement 36 mit dem der Gegenmasse 30 zugehörigen Haltewinkel 33 verbunden. Das erste, obere Ende des zweiten Stahlbands 35 ist durch ein Befestigungselement 36' an einer mit dem Stator 32 verbundenen Halteplatte 37 befestigt, die zur Erzeugung einer Vorspannung elastisch ausgebildet sein kann. Mit dem anderen Ende ist das zweite Stahlband 35 durch ein Befestigungselement 15' an der Platte 12 befestigt. Zur Umlenkung sind die gegeneinander vorgespannten Stahlbänder 34, 35 über Rollen 6, 6' geführt, die unabhängig voneinander drehbar, jedoch auf einer gemeinsamen Drehachse angeordnet sind. Die Rollen können jeweils einen Durchmesser von beispielsweise ca. 50 mm aufweisen. In Fig. 4 ist auch das weitere Lager 11 " zu erkennen, mit dem der Arm 10 auf der Führung 5' gelagert ist.

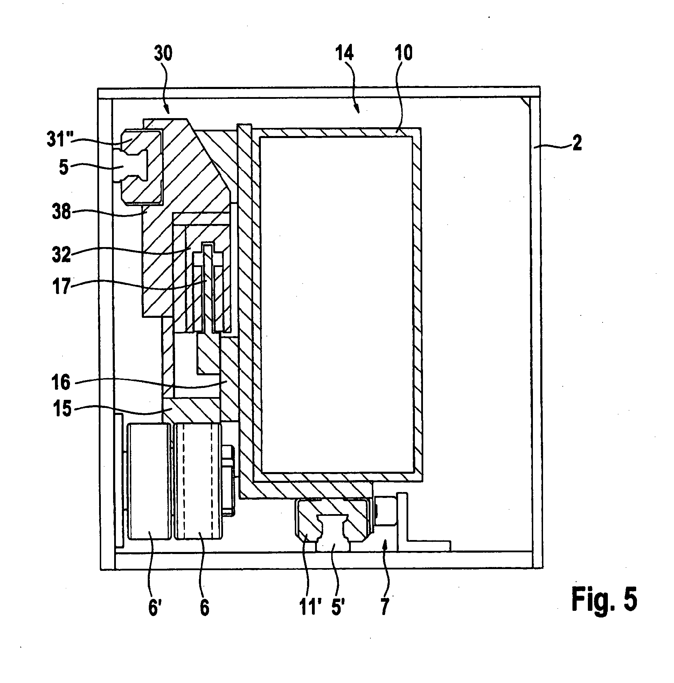

In Fig. 5 ist eine Querschnittsansicht der Achse 1 im Bereich der Rollen 6, 6' dargestellt, wobei der Übersichtlichkeit halber die der Gegenmasse 30 und die dem Schlitten 14 kinematisch zugeordneten Bauteile durch unterschiedliche Schraffierung gekennzeichnet sind. Das Gehäuse 2 ist im Querschnitt geschlossen. Der Arm 10 ist über ein Lager 11' auf der unteren Führung 5' gelagert. Mit dem Arm 10 sind über ein Zwischenstück 16 das Befestigungselement 15 und der Forcer 17 verbunden. Der Arm 10, das Lager 11', das Zwischenstück 16 und der Forcer 17 werden gemeinsam bewegt und gehören dem Schlitten an. Der Stator 32 ist über einen Halter 38 mit dem Lager 31", über das der Stator 32 auf der seitlichen Führung 5 gelagert ist, verbunden; diese Bauelemente gehören der Gegenmasse 30 an und werden gemeinsam in eine der Bewegungsrichtung des Schlittens 14 entgegengesetzte Richtung bewegt. In Fig. 5 sind ferner die am Gehäuse 2 angeordneten Rollen 6, 6' sowie ein Maßstabssystem 7 zu erkennen.

Beim Betrieb der vorstehend beschriebenen Achse 1 wird der Forcer 17 bestromt, um im Zusammenwirken mit dem Stator 32 eine Antriebskraft zu erzeugen. Die Antriebskraft wirkt direkt auf den Stator 32 und damit auf die Gegenmasse 30; eine gleich große Antriebskraft wirkt auf den Forcer 17 und damit auf den Schlitten 14 zurück. Die von dem Linearmotor erzeugten Antriebskräfte erzeugen daher direkt eine Relativbewegung von Schlitten 14 und Gegenmasse 30. Die Stahlbänder 34, 35 sind zwar dazu angeordnet, eine zur Bewegung des Schlittens 14 gegengleiche Bewegung der Gegenmasse 30 relativ zum Gehäuse 2 zu erzwingen, jedoch werden die Antriebskräfte nicht über die Stahlbänder 34, 35 übertragen, sondern lediglich Differenzkräfte, die beispielsweise durch unterschiedliche Reibungskräfte der Lager 11, 11' 11" des Schlittens 14 im Vergleich zu den Lagern 31, 31', 31" der Gegenmasse 30 entstehen können. Ebenso kann durch die Stahlbänder 34, 35 vermieden werden, dass bei einer nicht genau horizontalen Anordnung der Achse eine Schwerpunktsverlagerung stattfindet. Die Geschwindigkeit des Linearmotors ist doppelt so groß wie die Geschwindigkeit des Schlittens 14 bzw. der Gegenmasse 30 relativ zum Gehäuse 2.

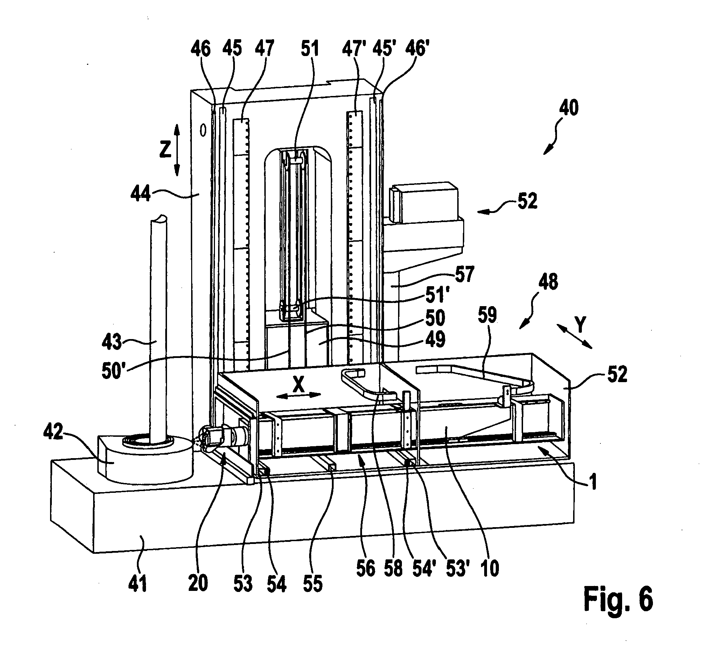

Das in Fig. 6 dargestellte Koordinatenmessgerät 40, bei dem ggf. vorhandene Abdeckungen bzw. ein Gehäuse nicht gezeigt sind, umfasst eine Basis 41, die einen Drehtisch 42 zur Aufnahme eines Werkstücks 43 trägt. Das Werkstück 43 kann mit Hilfe von Spannmitteln auf der Basis 41 bzw. dem Drehtisch 42 festgespannt sein (nicht dargestellt). Die Basis 41 ist mit einer feststehenden Säule 44 verbunden, die jeweils zwei parallele Führungen 45, 45', Maßstäbe 46, 46' und Statoren 47, 47' zweier Linearantriebe trägt. Entlang der Führungen 45, 45' ist durch die Linearantriebe der Z-Schlitten 48, der in Fig. 6 nahe seiner unteren Endposition gezeigt ist, in vertikaler, d.h. in Z-Richtung motorisch bewegbar. Auf die Maßstäbe 46, 46' greifen in Fig. 6 nicht dargestellte Positionsgeber zu, die am Z-Schlitten 48 angeordnet sind. Zum Ausgleich des Gewichts des Z-Schlittens 48 ist ein Gewichtsausgleich mit einem Gegengewicht 49 vorgesehen, das durch zwei Zugseile 50, 50' gehalten wird. Das Gegengewicht 49 ist in einer Ausnehmung der Z-Säule 44 geführt. Zur Verkürzung des notwendigen Verfahrwegs des Gegengewichts 49 weist dieses die doppelte Masse des Z-Schlittens 48 auf, wobei die Zugseile 50, 50' über nach Art eines Flaschenzugs angeordnete Rollen 51, 51' geführt werden. Hierdurch kann die Bauhöhe des Koordinatenmessgeräts 40 beispielsweise bei einem Verfahrweg des Z-Schlittens 48 von 1500 mm auf ca. 2,5 m begrenzt werden. An der Z-Säule 44 ist ein Elektronik-Gehäuse 52 zur Aufnahme wärmeerzeugender elektronischer Bauteile angeordnet.

Der Z-Schlitten 48 weist einen Grundkörper bzw. ein Gehäuse 52 auf, an dem in horizontaler Richtung, die hier als Y-Richtung bezeichnet wird, zwei parallele Führungen 53, 53', zwei jeweils benachbarte Statoren 54, 54' zweier Linearmotoren und ein Maßstab 55 angeordnet sind. Durch die Linearmotoren ist ein Y-Schlitten 56 in Y-Richtung motorisch beweglich, der eine wie vorstehend beschriebene Achse 1, die hier als X-Achse ausgebildet ist, trägt. Mit dem Maßstab 55 wirkt ein am Y-Schlitten 56 angeordneter, nicht dargestellter Geber zusammen.

Die X-Achse umfasst insbesondere einen in X-Richtung beweglichen Arm 10, der den Tastkopf 20 trägt. Da die Anordnung des Koordinatenmessgeräts 40 in der Regel derart ist, dass die Beladung und Bedienung von der in Fig. 6 linken Seite erfolgt, wird dasjenige Ende des Arms 10, das den Tastkopf 20 trägt, als "vorderes" Ende bezeichnet. In Fig. 6 sind ferner symbolisch die Kabelführung 57 von der feststehenden Säule 44 zum Z-Schlitten 48, die Kabelführung 58 vom Z-Schlitten 48 zum Y-Schlitten 56 und die Kabelführung 59 vom Z-Schlitten zu dem in X-Richtung beweglichen Arm 10 angedeutet.

Um den Tastkopf 20 relativ zum Werkstück 43 in eine für eine Messung geeignete Position zu bringen, werden die X-, die Y- und/oder die Z-Achse des Koordinatenmessgeräts 40 in der jeweiligen Richtung, die in Fig. 6 durch entsprechende Doppelpfeile angegeben ist, bewegt. Um zu vermeiden, dass die Beschleunigungskräfte, die bei Bewegung des Arms 10 mit dem Tastkopf 20 in X-Richtung auftreten, Verformungen und/oder Schwingungen der Achsen des Koordinatenmessgeräts auslösen, ist die X-Achse in der vorstehend beschriebenen Weise ausgebildet, wobei der Stator des Linearantriebs der X-Achse in entgegengesetzter Richtung zum Arm 10 bewegt wird. Die hierdurch verursachte größere Gesamtlänge der X-Achse ist bei der üblichen Aufstellung eines Koordinatenmessgeräts nicht störend, da die Tiefe des Standplatzes in der Regel durch andere Maschinen mit einer größeren Erstreckung in X-Richtung bestimmt wird. Auch die Y-Achse, die einen ähnlichen Verfahrweg wie die X-Achse aufweisen kann, kann in der für die X-Achse beschriebenen Weise ausgebildet sein. Wie aus der Darstellung der Fig. 6 verständlich wird, kann durch die erfindungsgemäße Ausgestaltung der auf der Z- und der Y-Achse aufbauenden X-Achse die größtmögliche Steigerung der Genauigkeit bzw. Dynamik des Koordinatenmessgeräts 40 erzielt werden. Eine gewisse Steigerung ist auch durch eine entsprechende Ausbildung der auf der Z-Achse aufbauenden Y-Achse zu erzielen. Die vorliegende Erfindung ist jedoch nicht auf einen derartigen Aufbau des Koordinatenmessgeräts beschränkt.

Der Übersichtlichkeit halber sind nicht in allen Figuren alle Einzelheiten dargestellt. Nicht zu allen Figuren sind alle Bezugszeichen erläutert. Gleiche Bezugszeichen haben in den Figuren die gleiche Bedeutung.

### Bezugszeichenliste

- 1: Achse
- 2: Gehäuse
- 3, 3', 3", 3"': Haltebügel
- 4: Haltewinkel
- 5, 5': Führung
- 6, 6': Rolle
- 7: Maßstabssystem
- 10: Arm
- 11, 11', 11": Lager
- 12: Platte
- 13: Haltewinkel
- 14: Schlitten
- 15, 15': Befestigungselement
- 16: Zwischenstück
- 17: Forcer
- 20: Tastkopf
- 21: Dreh-Schwenk-Gelenk
- 22: Sensor
- 23: Lichtstrahl
- 24, 24': Beobachtungsrichtung
- 30: Gegenmasse
- 31, 31', 31": Lager
- 32: Stator
- 33: Haltewinkel
- 34: Stahlband
- 35: Stahlband
- 36, 36': Befestigungselement
- 37: Halteplatte
- 38: Halter
- 40: Koordinatenmessgerät
- 41: Basis
- 42: Drehtisch
- 43: Werkstück
- 44: Säule
- 45, 45': Führung
- 46, 46': Maßstab
- 47, 47': Stator
- 48: Z-Schlitten
- 49: Gegengewicht
- 50, 50': Zugseil
- 51, 51': Rolle
- 52: Gehäuse
- 53,: 53'Führung
- 54, 54': Stator
- 55: Maßstab
- 56: Y-Schlitten
- 57: Kabelführung
- 58: Kabelführung
- 59: Kabelführung

## Patentansprüche

1. Koordinatenmessgerät mit mindestens einer horizontalen Achse (1), die eine Antriebsanordnung und einen durch die Antriebsanordnung in einer Bewegungsrichtung bewegbaren Schlitten (14) umfasst, **dadurch gekennzeichnet, dass** die Antriebsanordnung zum mit der Bewegung des Schlittens (14) gleichzeitigen Bewegen einer Gegenmasse (30) zur Kompensation dynamischer Kräfte in einer der Bewegungsrichtung des Schlittens (14) entgegengesetzten Richtung ausgebildet ist, wobei die Achse (1) mindestens eine Führung (5, 5') aufweist, auf der der Schlitten (14) und die Gegenmasse (30) geführt sind.

2. Koordinatenmessgerät nach Anspruch 1, **dadurch gekennzeichnet, dass** die Antriebsanordnung dein Schlitten (14) zugeordnet ist und auf die Gegenmasse (30) wirkt oder die Antriebsanordnung der Gegenmasse (30) zugeordnet ist und auf den Schlitten (14) wirkt.

3. Koordinatenmessgerät nach Anspruch 1 oder 2, **dadurch gekennzeichnet, dass** die Antriebsanordnung derart ausgebildet ist, dass bei einer Bewegung des Schlittens (14) ein Massenschwerpunkt der Achse (1) relativ zu einem Grundkörper der Achse (1) unverändert bleibt.

4. Koordinatenmessgerät nach Anspruch 3, **dadurch gekennzeichnet, dass** die Masse des Schlittens (14) und die Masse der Gegenmasse (30) gleich groß sind und die Antriebsanordnung zum mit der Bewegung des Schlittens (14) um einen Bewegungsbetrag gleichzeitigen Bewegen der Gegenmasse (30) um einen gleichen Bewegungsbetrag in der der Bewegungsrichtung des Schlittens (14) entgegengesetzten Richtung ausgebildet ist.

5. Koordinatenmessgerät nach Anspruch 3 oder 4, **dadurch gekennzeichnet, dass** der Schlitten (14) und die Gegenmasse (30) durch mindestens ein langerstrecktes, flexibles, über mindestens ein mit dem Grundkörper verbundenes Umlenkmittel geführtes Zugmittel miteinander verbunden sind.

6. Koordinatenmessgerät nach dem vorhergehenden Anspruch, **dadurch gekennzeichnet, dass** das mindestens eine Zugmittel als vorgespanntes Zugseil oder Stahlband (34, 35) ausgebildet ist.

7. Koordinatenmessgerät nach Anspruch 5 oder 6, **dadurch gekennzeichnet, dass** das Zugmittel am Schlitten (14) und an der Gegenmasse (30) befestigt ist, vom Schlitten (14) und von der Gegenmasse (30) zum Umlenkmittel jeweils parallel zur Richtung der Achse (1) geführt ist und durch das Umlenkmittel aus einer positiven Richtung der Achse (1) in eine negative Richtung der Achse (1) umgelenkt wird.

8. Koordinatenmessgerät nach einem der Ansprüche 5 bis 7, **dadurch gekennzeichnet, dass** ein erstes und ein zweites Zugmittel vorgesehen sind, die in einander entgegengesetzten Richtungen am Schlitten (14) ansetzen, dass das erste Zugmittel durch ein erstes Umlenkmittel und das zweite Zugmittel durch ein zweites Umlenkmittel in eine jeweils entgegengesetzte Richtung umgelenkt werden und dass das erste und das zweite Zugmittel in einander entgegengesetzten Richtungen an der Gegenmasse (30) ansetzen.

9. Koordinatenmessgerät nach Anspruch 8, **dadurch gekennzeichnet, dass** das erste und das zweite Umlenkmittel als Rollen (6, 6') ausgebildet sind, die eine gemeinsame, mit dem Grundkörper verbundene Drehachse aufweisen.

10. Koordinatenmessgerät nach einem der vorhergehenden Ansprüche, **dadurch gekennzeichnet, dass** die Antriebsanordnung einen Linearmotor umfasst, der zwischen Schlitten (14) und Gegenmasse (30) wirkt.

11. Koordinatenmessgerät nach dem vorhergehenden Anspruch, **dadurch gekennzeichnet, dass** der Linearmotor einen Forcer (17) und einen Stator (32) umfasst, wobei der Forcer (17) dem Schlitten (14) und der Stator (32) der Gegenmasse (30) zugeordnet ist.

12. Koordinatenmessgerät nach dem vorhergehenden Anspruch, **dadurch gekennzeichnet, dass** die Achse (1) eine erste und eine zweite Führung (5, 5') aufweist, wobei der Schlitten (14) mit einem Lager (11) auf der ersten Führung (5) und mit zwei weiteren Lagern (11', 11 ") auf der zweiten Führung (5') und die Gegenmasse (30) mit zwei Lagern (31, 31 ") auf der ersten Führung (5) und mit einem weiteren Lager (31') auf der zweiten Führung (5') geführt ist.

13. Koordinatenmessgerät nach einem der vorhergehenden Ansprüche, **dadurch gekennzeichnet, dass** das Koordinatenmessgerät (40) eine Mehrzahl von aufeinander aufbauenden, zueinander senkrecht stehenden Achsen aufweist, wobei die mindestens eine horizontale Achse (1) auf mindestens einer weiteren Achse kinematisch aufbaut.

14. Verfahren zum Betreiben eines Koordinatenmessgeräts, wobei das Koordinatenmessgerät (40) mindestens eine horizontale Achse (1) umfasst, die eine Antriebsanordnung und einen durch die Antriebsanordnung bewegbaren Schlitten (14) umfasst, **dadurch gekennzeichnet, dass** gleichzeitig mit einer Bewegung des Schlittens (14) in einer Bewegungsrichtung eine Gegenmasse (30) zur Kompensation dynamischer Kräfte in einer der Bewegungsrichtung entgegengesetzten Richtung bewegt wird, wobei die Achse (1) mindestens eine Führung (5, 5') aufweist, auf der der Schlitten (14) und die Gegenmasse (30) geführt sind.

## Claims

1. Coordinate measuring instrument having at least one horizontal axis (1), which comprises a drive arrangement and a carriage (14) that can be moved in a direction of movement by the drive arrangement, **characterized in that** the drive arrangement is designed to move a counterweight (30) for the compensation of dynamic forces at the same time as the movement of the carriage (14), in a direction opposite to the direction of movement of the carriage (14), the axis (1) having at least one guide (5, 5'), on which the carriage (14) and the counterweight (30) are guided.

2. Coordinate measuring instrument according to Claim 1, **characterized in that** the drive arrangement is assigned to the carriage (14) and acts on the counterweight (30), or the drive arrangement is assigned to the counterweight (30) and acts on the carriage (14).

3. Coordinate measuring instrument according to Claim 1 or 2, **characterized in that** the drive arrangement is designed in such a way that, during a movement of the carriage (14), a mass centre of gravity of the axis (1) remains unchanged relative to a base of the axis (1).

4. Coordinate measuring instrument according to Claim 3, **characterized in that** the mass of the carriage (14) and the mass of the counterweight (30) are equally large, and the drive arrangement is designed, at the same time as the movement of the carriage (14) by an amount of movement, to move the counterweight (30) by a same amount of movement in the direction opposite to the direction of movement of the carriage (14).

5. Coordinate measuring instrument according to Claim 3 or 4, **characterized in that** the carriage (14) and the counterweight (30) are connected to each other by means of at least one elongated flexible pulling means guided over at least one deflection means connected to the base.

6. Coordinate measuring instrument according to the preceding claim, **characterized in that** the at least one pulling means is implemented as a pretensioned pull cord or steel tape (34, 35).

7. Coordinate measuring instrument according to Claim 5 or 6, **characterized in that** the pulling means is fixed to the carriage (14) and to the counterweight (30), is guided from the carriage (14) and from the counterweight (30) to the deflection means, in each case parallel to the direction of the axis (1), and is deflected from a positive direction of the axis (1) to a negative direction of the axis (1) by the deflection means.

8. Coordinate measuring instrument according to one of Claims 5 to 7, **characterized in that** a first and a second pulling means are provided, which are attached to the carriage (14) in mutually opposite directions, **in that** the first pulling means is deflected by a first deflection means and the second pulling means is deflected by a second deflection means in a respectively opposite direction, and **in that** the first and the second pulling means are attached to the counterweight (30) in mutually opposite directions.

9. Coordinate measuring instrument according to Claim 8, **characterized in that** the first and the second deflection means are formed as rollers (6, 6'), which have a common axis of rotation that is connected to the base.

10. Coordinate measuring instrument according to one of the preceding claims, **characterized in that** the drive arrangement comprises a linear motor which acts between carriage (14) and counterweight (30).

11. Coordinate measuring instrument according to the preceding claim, **characterized in that** the linear motor comprises a forcer (17) and a stator (32), the forcer (17) being assigned to the carriage (14) and the stator (32) to the counterweight (30).

12. Coordinate measuring instrument according to the preceding claim, **characterized in that** the axis (1) has a first and a second guide (5, 5'), the carriage (14) being guided with a bearing (11) on the first guide (5) and with two further bearings (11', 11") on the second guide (5'), and the counterweight (30) being guided with two bearings (31, 31") on the first guide (5) and with a further bearing (31') on the second guide (5').

13. Coordinate measuring instrument according to one of the preceding claims, **characterized in that** the coordinate measuring instrument (40) has a plurality of axes building up on one another and perpendicular to one another, the at least one horizontal axis (1) building kinematically on at least one further axis.

14. Method for operating a coordinate measuring instrument, the coordinate measuring instrument (40) comprising at least one horizontal axis (1), which comprises a drive arrangement and a carriage (14) that can be moved by the drive arrangement, **characterized in that** at the same time as a movement of the carriage (14) in a direction of movement, a counterweight (30) for the compensation of dynamic forces is moved in a direction opposite to the direction of movement, the axis (1) having at least one guide (5, 5'), on which the carriage (14) and the counterweight (30) are guided.

## Revendications

1. Appareil de mesure de coordonnées comprenant au moins un axe horizontal (1) qui comprend un agencement d'entraînement et un chariot (14) pouvant être déplacé par l'agencement d'entraînement dans une direction de déplacement, **caractérisé en ce que** l'agencement d'entraînement est réalisé pour déplacer un contrepoids (30) simultanément au déplacement du chariot (14) en vue de compenser les forces dynamiques dans une direction opposée à la direction de déplacement du chariot (14), l'axe (1) présentant au moins un guide (5, 5') sur lequel sont guidés le chariot (14) et le contrepoids (30).

2. Appareil de mesure de coordonnées selon la revendication 1, **caractérisé en ce que** l'agencement d'entraînement est associé au chariot (14) et agit sur le contrepoids (30) ou l'agencement d'entraînement est associé au contrepoids (30) et agit sur le chariot (14).

3. Appareil de mesure de coordonnées selon la revendication 1 ou 2, **caractérisé en ce que** l'agencement d'entraînement est réalisé de telle sorte que dans le cas d'un déplacement du chariot (14), un centre de gravité de masse de l'axe (1) reste inchangé par rapport à un corps de base de l'axe (1).

4. Appareil de mesure de coordonnées selon la revendication 3, **caractérisé en ce que** la masse du chariot (14) et la masse du contrepoids (30) sont identiques et l'agencement d'entraînement est réalisé de manière à déplacer le contrepoids (30) sur une certaine distance simultanément au déplacement du chariot (14) sur une distance identique dans la direction opposée à la direction de déplacement du chariot (14).

5. Appareil de mesure de coordonnées selon la revendication 3 ou 4, **caractérisé en ce que** le chariot (14) et le contrepoids (30) sont connectés l'un à l'autre par le biais d'au moins un moyen de traction allongé, flexible, guidé par le biais d'au moins un moyen de renvoi connecté au corps de base.

6. Appareil de mesure de coordonnées selon la revendication précédente, **caractérisé en ce que** l'au moins un moyen de traction est réalisé sous forme de câble de traction précontraint ou de bande d'acier précontrainte (34, 35).

7. Appareil de mesure de coordonnées selon la revendication 5 ou 6, **caractérisé en ce que** le moyen de traction est fixé au chariot (14) et au contrepoids (30), est à chaque fois guidé parallèlement à la direction de l'axe (1) depuis le chariot (14) et le contrepoids (30) jusqu'au moyen de renvoi et est renvoyé par le moyen de renvoi depuis une position positive de l'axe (1) dans une direction négative de l'axe (1).

8. Appareil de mesure de coordonnées selon l'une quelconque des revendications 5 à 7, **caractérisé en ce qu'**un premier et un deuxième moyen de traction sont prévus, lesquels agissent sur le chariot (14) dans des directions opposées l'une à l'autre, **en ce que** le premier moyen de traction est renvoyé par un premier moyen de renvoi et le deuxième moyen de traction est renvoyé par un deuxième moyen de renvoi dans une direction respectivement opposée, et **en ce que** le premier et le deuxième moyen de traction agissent dans des directions opposées l'une à l'autre sur le contrepoids (30).

9. Appareil de mesure de coordonnées selon la revendication 8, **caractérisé en ce que** le premier et le deuxième moyen de renvoi sont réalisés sous forme de poulies (6, 6') qui présentent un axe de rotation commun, connecté au corps de base.

10. Appareil de mesure de coordonnées selon l'une quelconque des revendications précédentes, **caractérisé en ce que** l'agencement d'entraînement comprend un moteur linéaire qui agit entre le chariot (14) et le contrepoids (30).

11. Appareil de mesure de coordonnées selon la revendication précédente, **caractérisé en ce que** le moteur linéaire comprend un élément mobile (17) et un stator (32), l'élément mobile (17) étant associé au chariot (14) et le stator (32) étant associé au contrepoids (30).

12. Appareil de mesure de coordonnées selon la revendication précédente, **caractérisé en ce que** l'axe (1) présente un premier et un deuxième guide (5, 5'), le chariot (14) étant guidé avec un palier (11) sur le premier guide (5) et avec deux autres paliers (11', 11") sur le deuxième guide (5') et le contrepoids (30) étant guidé avec deux paliers (31, 31") sur le premier guide (5) et avec un autre palier (31') sur le deuxième guide (5').

13. Appareil de mesure de coordonnées selon l'une quelconque des revendications précédentes, **caractérisé en ce que** l'appareil de mesure de coordonnées (40) présente une pluralité d'axes perpendiculaires les uns aux autres se supportant les uns les autres, l'au moins un axe horizontal (1) étant supporté cinématiquement sur au moins un autre axe.

14. Procédé pour faire fonctionner un appareil de mesure de coordonnées, l'appareil de mesure de coordonnées (40) comprenant au moins un axe horizontal (1) qui comprend un agencement d'entraînement et un chariot (14) pouvant être déplacé par l'agencement d'entraînement, **caractérisé en ce que** simultanément à un déplacement du chariot (14) dans une direction de déplacement, un contrepoids (30) est déplacé dans une direction opposée à la direction de déplacement en vue de compenser les forces dynamiques, l'axe (1) présentant au moins un guide (5, 5') sur lequel sont guidés le chariot (14) et le contrepoids (30).
